# EUROPEAN PATENT APPLICATION

(11) **EP 0 580 284 A1**
(43) Date of publication of application: **26.01.1994**
(21) Application number: 93304407.5
(22) Date of filing: 07.06.1993
(51) Int. Cl.: C09B 29/033, C09B 43/128, C08K 5/45, C09D 11/00

(54) **3,5-Dinitrothiophenazo disperse dyes**

(30) Priority: 24.07.1992 GB 9215777
(71) Applicant: ZENECA LIMITED, London W1Y 6LN (GB)
(72) Inventor: Cavanagh, Denise, Blackley, Manchester M9 3PB (GB); Wight, Paul, Prestwich, Manchester M25 8SF (GB)
(74) Representative: Pugsley, Roger Graham

(57) **Abstract**

A disperse monoazo dye of Formula (2): 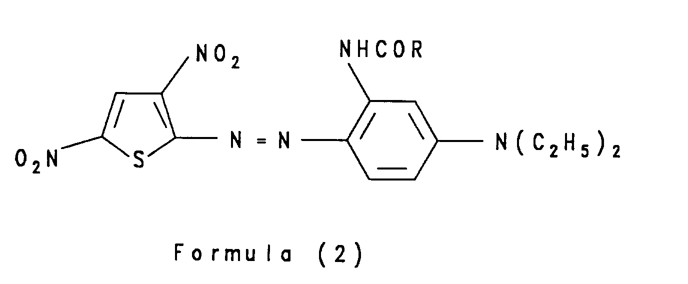
wherein:
R is selected from ethyl and n-propyl and a process for its use to dye textile materials is provided. These dyes have superior dyebath stabilities.

## Description

This invention relates to disperse dyes and more particularly to disperse dyes of the monoazo series and to methods for their manufacture and use.

In order to gain acceptance as a commercial product, a dye must possess an appropriate combination of properties. Technical factors influencing the commercial selection of a particular dye include hue, brightness, ease of manufacture, dyeing performance and fastness properties. Inevitably, compromises must be made and many dyes achieve wide commercial acceptance without being completely satisfactory in every respect.

One disperse dye that has achieved considerable importance has a monoazo structure of the Formula (1): 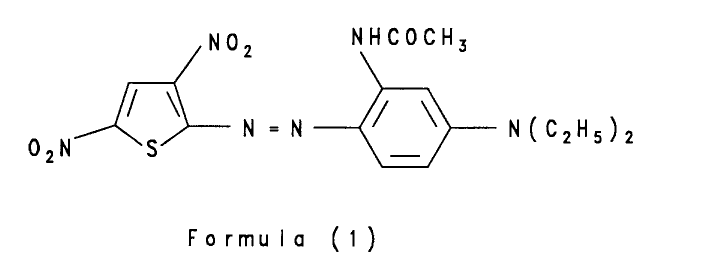
The dye of Formula (1) has been disclosed in United Kingdom Patent No 1394368 and, because of its unique bluish-green shade, it is used in conjunction with yellow dyes for the coloration of polyester and similar textile materials in bright green fashion shades. Unfortunately, the dye of Formula I is not entirely satisfactory in respect of its stability under dyebath conditions and some loss of tinctorial strength can occur with consequent colour matching problems in the production of mixture shades.

It has now been found that certain homologues of the dye of Formula (1) have the valuable properties associated with that dye and, in addition, are surprisingly superior in respect of dyebath stability.

Accordingly, the present invention provides disperse monoazo dyes of the Formula (2): 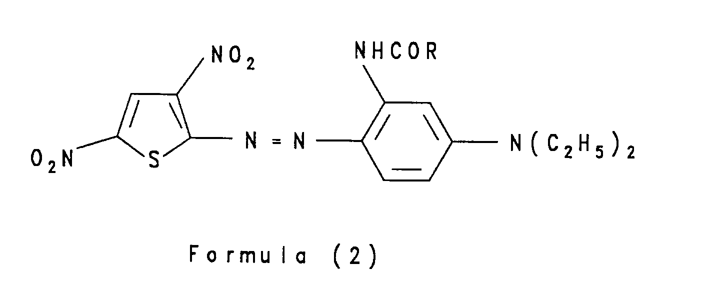
wherein:
R is selected from ethyl and n-propyl.
R is preferably ethyl.

The dyes of Formula (2) may be prepared by coupling diazotised 2-amino-3,5-dinitrothiophene with N,N-diethyl-N'-propionyl-1,3-diaminobenzene or N,N-diethyl-N'-butyryl-1,3-diaminobenzene. The diazotisation and coupling may be carried out by appropriate methods conventionally used for these or closely related reactants, suitable methods having been described in United Kingdom Patent No 1394368.

The dyes of Formula (2) may also be prepared by propionylation or butyrylation of 3-amino-4-(3,5-dinitrothien-2-ylazo)-N,N-diethylaniline obtained, for example, by hydrolysis of the compound of Formula (1).

After formation, the dyes of Formula (2) may be isolated and, if desired, purified using known techniques.

The disperse monoazo dyes of the invention are valuable for colouring synthetic textile materials, especially secondary cellulose acetate, cellulose triacetate, polyamide such as polyhexamethylene adipamide and, above all, aromatic polyester such as polyethylene terephthalate textile materials. Such materials can be in the form of filaments, loose fibres, yarn or woven or knitted fabrics. The dyes are also useful for colouring fibre blends containing one or more synthetic fibrous material together with other types of fibre, for example polyester-cotton blends.

The dyes, optionally in conjunction with other disperse dyes, may be applied to the synthetic textile materials by methods which are conventionally employed in applying disperse dyes to such materials. Thus, the dyes in the form of aqueous dispersions can be applied by dyeing, padding or printing processes using the conditions and additives conventionally used in carrying out such processes.

The dyes may also be applied to textile materials by known methods of transfer colour printing such as sublimation transfer printing and wet transfer printing. They can also be used for the melt coloration of synthetic polymers and as pigments for the coloration of inks and paints.

The invention is illustrated but not limited by the following Examples.

### Example 1

The dye of Formula (1) (86g) was stirred in methyl cellosolve (600cm³) with 4M sulphuric acid (300cm³) and heated to reflux temperature. After stirring at reflux for 7 hours, the mixture was cooled, stirred at room temperature overnight and then poured on to ice/water (600g). The product was filtered off, washed well with water and dried at 50^{o}C in a fan oven.

The 3-amino-4-(3,5-dinitrothien-2-ylazo)-N,N-diethylaniline so obtained (20g) was stirred in acetone (150cm³) with pyridine (10cm³). Propionyl chloride (15cm³) was added dropwise and the reaction mixture was then heated to reflux temperature and stirred at reflux for 3 hours. The mixture was cooled to room temperature and then diluted with toluene (50cm³). The product was filtered off and washed with water. The filter cake was slurried in water and stirred at room temperature for 30 minutes. The product was filtered off and dried at 50^{o}C giving 17.5g of the dye of Formula (2) wherein R is ethyl.

When applied to aromatic polyester textile material from an aqueous dispersion, the product gave a bluish-green shade and showed good dyeing and fastness properties.

In order to demonstrate its dyebath stability, a dyebath containing the dye of Formula (2) in which R is ethyl was prepared. The dyebath was then divided into two portions. The first portion was held for 30 minutes at 130^{o}C and then cooled to room temperature. Equal weights of polyester fabric were introduced into the two dyebath portions and were dyed for 45 minutes at 130^{o}C under identical conditions. The dyed fabrics were examined and it was found that the dyeing from the first portion was 19% weaker than that from the second portion.

When the dye of Formula (1) was subjected to the same test, the dyeing from the first dyebath portion was 76% weaker than that from the second portion showing that the dye of Formula (1) is much less stable than a dye of Formula 2 under the conditions conventionally employed in disperse dyeing processes.

### Example 2

3-Amino-4-(3,5-dinitrothien-2-ylazo)-N,N-diethylaniline (5g) was stirred in acetone (50cm³) with pyridine (3cm³) and butyryl chloride (4cm³) was added dropwise and the reaction mixture was then heated to reflux temperature and stirred at reflux for 4 hours. The reaction mixture was filtered and the filtrates were cooled to room temperature and poured into cold water. The product was filtered off and washed with water before drying at 50^{o}C giving 5g of the dye of Formula (2) wherein R is n-propyl.

When applied to aromatic polyester textile material from an aqueous dispersion, the product gave a bluish-green shade and showed good dyeing and fastness properties.

In order to demonstrate its dyebath stability, a dyebath containing the dye of Formula (2) in which R is propyl was prepared. The dyebath was then divided into two portions. The first portion was held for 30 minutes at 130^{o}C and then cooled to room temperature. Equal weights of polyester fabric were introduced into the two dyebath portions and were dyed for 45 minutes at 130^{o}C under identical conditions. The dyed fabrics were examined and it was found that the dyeing from the first portion was 45% weaker than that from the second portion.

## Claims

1. A disperse monoazo dye of Formula (2): 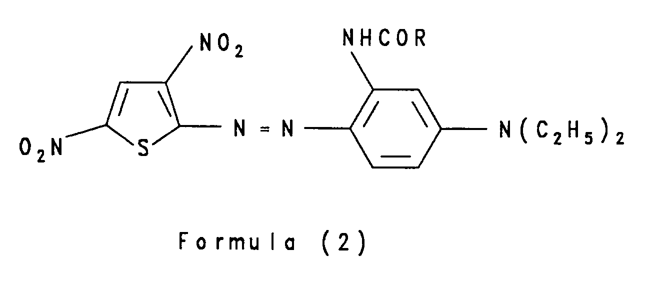 wherein:
R is selected from ethyl and n-propyl.

2. A disperse monoazo dye according to Claim 1 in which R is ethyl

3. A process for colouring synthetic textile materials or fibre blends thereof which comprises applying to the synthetic textile material a disperse monoazo dye of Formula (2): 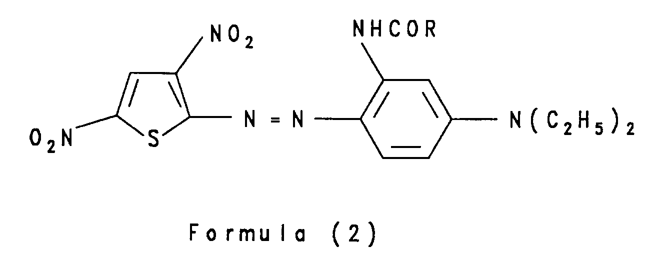 wherein:
R is selected from ethyl and n-propyl.

4. A process according to Claim 4 in which the synthetic textile material is an aromatic polyester textile material.
